# EUROPÄISCHE PATENTSCHRIFT

(11) **EP 3 187 383 B1**
(45) Veröffentlichungstag und Bekanntmachung des Hinweises auf die Patenterteilung: **03.10.2018**
(21) Anmeldenummer: 17150012.7
(22) Anmeldetag: 02.01.2017
(51) Int. Cl.: B60R 25/20

(54) **VERFAHREN UND VORRICHTUNG ZUR EXTERNEN BETÄTIGUNG EINES AKTORS EINES FAHRZEUGS**
METHOD AND DEVICE FOR REMOTELY ACTUATING AN ACTUATOR OF A VEHICLE
PROCÉDÉ ET DISPOSITIF D'ACTIONNEMENT EXTERNE D'UN ACTIONNEUR DE VÉHICULE AUTOMOBILE

(30) Priorität: 04.01.2016 DE 102016100069
(43) Veröffentlichungstag der Anmeldung: 05.07.2017
(73) Patentinhaber: VOLKSWAGEN AKTIENGESELLSCHAFT, 38440 Wolfsburg (DE)
(72) Erfinder: Ette, Bernd, 38442 Wolfsburg (DE); Wintsche, Volker, 01099 Dresden (DE)
(74) Vertreter: 2SPL Patentanwälte PartG mbB

(56) Entgegenhaltungen:
- WO-A1-2015/113549
- WO-A1-2015/139882
- DE-A1-102013 019 925

## Beschreibung

Die Erfindung betrifft ein Verfahren zur externen Betätigung eines Aktors eines Fahrzeugs, eine Vorrichtung zur externen Betätigung eines Aktors eines Fahrzeugs, sowie ein Fahrzeug.

Bei Fahrzeugen wird vermehrt Wert darauf gelegt, die Bedienung, hier speziell das Betätigen eines Aktors wie einer Heckklappe, von außerhalb des Fahrzeugs zu erleichtern.

DE 20 2009 018 206 U1 offenbart eine Vorrichtung zur Betätigung einer Tür oder Klappe eines Fahrzeugs mit mindestens zwei voneinander beabstandeten Sensoren, wobei die Tür nur geöffnet wird, wenn eine Bewegung eines Gegenstands wie eines Fußes mit mindestens einem vorbestimmten Richtungswechsel detektiert wird.

DE 10 2013 200 457 A1 offenbart eine Bedienvorrichtung für ein Fahrzeug mit einer Gestenüberwachungseinheit, wobei eine Bewegungsgeste zwei Bewegungsabschnitt umfasst und der erste in den zweiten Bewegungsabschnitt räumlich übergeht und die Bewegungsrichtungen umgekehrt oder zueinander gewinkelt sind.

DE 10 2014 204 911 A1 offenbart ein Verfahren zum Betätigen eines Schließelements eines Fahrzeugs, wobei das Schließelement nur betätigt wird, wenn die Geste einem zu einer Stelle gerichteten Bewegungsablauf entspricht, der eine Rückbewegung des Objekts oder ein Verweilen des Objektes während eines vorbestimmten Zeitintervalls an der Stelle umfasst.

Bei allen bekannten Lösungen zur Öffnung eines Kofferraums sind besondere Bewegungen, wie Kickgesten mit dem Fuß oder ähnliches erforderlich.

Der Erfindung liegt nun die Aufgabe zugrunde, die Betätigung eines Aktors eines Fahrzeugs durch eine Geste zu vereinfachen.

Diese Aufgabe wird gelöst durch ein Verfahren gemäß Anspruch 1, eine Vorrichtung gemäß Anspruch 8, beziehungsweise ein Fahrzeug gemäß Anspruch 12.

Das erfindungsgemäße Verfahren zur externen Betätigung eines Aktors eines Fahrzeugs mit einem optischen Sensor umfasst die Schritte:
- Erfassen einer Annäherung einer Person in einem Annäherungsbereich des optischen Sensors;
- Erkennen, innerhalb eines Erfassungsbereichs des optischen Sensors, einer gezielten Annäherung von Schritten einer Person zu einem Betätigungsbereich des optischen Sensors;
- Betätigen des Aktors, wenn ein Schritt in den Betätigungsbereich des optischen Sensors erkannt wird.

Das erfindungsgemäße Verfahren hat den Vorteil, dass der Öffnungswunsch zum Beispiel einer Heckklappe frühzeitiger erfolgen kann als bei einem Tritt auf einen Spot oder bei einer Kickbewegung. Mit Hilfe der Annäherungserkennung soll das Sensorsystem nur dann mit Abstandsinformationen aktiv werden, wenn sich eine Person zu einem Gestensensor annähert. Bereits die Richtung der Schritte zum Erfassungsbereich werden beobachtet. Ein Vorbeigehen einer Person wird erkannt, wenn die Schritte und Fußspitzen nicht in Richtung des optischen Sensors zeigen. Weiterhin sind die zwei Füße oder Beine im Bild zur Bewertung heranzuziehen. Das Öffnen oder auch Schließen der Heckklappe erfolgt schon vor dem Abstellen des Fußes im Spotbereich, also bei Erkennung eines oder mehrerer Schritte zum Betätigungsbereich. Die Misuse-Erkennung beim Vorbeilaufen wird robuster, da beide Füße und deren Bewegungsrichtung beobachtet werden. Die Erkennung des Vorbeigehens kann bei der Auswertung mit zwei Füßen oder Beinen wesentlich verbessert werden und die Erkennung des Vorbeigehens erfolgt frühzeitiger, so dass vom Fahrzeug benötigte Energie reduziert wird. Das Öffnen oder Schließen der Heckklappe wird durch die Schritterkennung verbessert, da schon ein zweiter gezielter Schritt zur Betätigung des Aktors beziehungsweise zur Öffnung/Schließung der Heckklappe oder Tür führen kann. Vorgestellt wird ein Verfahren zur Vorfelderkennung und -bewertung, ob eine Geste in der nächsten Zeit am Fahrzeug durchgeführt werden wird. Diese frühzeitige Erkennung der Geste erlaubt ein große Reduktion von Totzeiten in der Bedienung. Zudem ist keine besondere Geste wie ein Tritt auf einen Spot, eine abgewinkelte Bewegung oder eine Kickbewegung erforderlich. Durch die Erkennung der einzelnen Schritte der Person kann deren Absicht, das heißt Annäherung an den durch den Aktor betätigten Gegenstand wie eine Heckklappe, im Vorfeld erkannt werden. Dies ermöglicht die Betätigung ohne besondere Gestik, durch den normalen Gang.

Der Annäherungsbereich und/oder der Erfassungsbereich kann an von dem optischen Sensor detektierte Umgebungsbedingungen angepasst werden. Die dynamische Anpassung des Erfassungsbereiches und/oder Annäherungsbereiches erfolgt bei einer Erkennung von Hindernissen, zum Beispiel einer engen Parklücke. Die dynamische Anpassung wird im laufenden Betrieb der Annäherungserkennung durchgeführt. Wird der Annäherungsbereich hinter dem Fahrzeug durch ein parkendes Fahrzeug eingeschränkt, dann wird der Bereich dynamisch verkleinert. So kann das Verfahren einfach und schnell an sich ändernde Umgebungen angepasst werden.

Eine Bildrate des optischen Sensors kann an die erkannte Schrittgeschwindigkeit angepasst werden. Die Abstandsmessung wird der Schrittgeschwindigkeit der Person angepasst. Läuft die Person schnell zum Erfassungsbereich kann die Bildinformation des Abstandsbildes zum Beispiel mit bis zu 20 Frames/Sekunde erfolgen. Läuft die Person langsamer, kann zum Beispiel die Bildrate auf 10 Frames/Sekunde reduziert werden.

Nach dem Erkennen einer gezielten Annäherung können Linien auf den Boden projiziert werden, welche den Betätigungsbereich des optischen Sensors kennzeichnen. Da dank der Schritterkennung für die Betätigung des Aktors keine Bewegung auf einen Punkt oder einem kleinen Bereich nötig ist, genügen nun Linien oder ein Trapez und kein Punkt auf dem Boden. Hiermit kann die Sichtbarkeit des Betätigungsbereichs auch bei starker Sonneneinstrahlung gewährleistet werden.

Es kann vorgesehen sein, dass die Linien projiziert werden und/oder der Aktor betätigt wird, wenn eine erfolgreiche Identifizierung der Person durch ein schlüsselloses Zugangssystem des Fahrzeugs erfolgt ist. Die Identität der Person beziehungsweise die Berechtigung der Person zum Öffnen des Fahrzeugs wird so geprüft. Dies kann zum Beispiel über ein schlüsselloses Zugangsverfahren geschehen. Wenn eine Berechtigung zum Öffnen des Fahrzeugs vorliegt, läuft das Verfahren weiter. Falls nicht, wird das Verfahren abgebrochen.

Es kann ferner vorgesehen sein, dass für das Erkennen einer gezielten Annäherung von Schritten eine Objekterkennung basierend auf Daten des optischen Sensors durchgeführt wird, bei der ein Fußpaar und die Schrittabfolge der einzelnen Füße detektiert wird. Wenn es sich um ein Fußpaar handelt, also zwei Füße oder auch zwei Beine, wird das zu erfassende Objekt auf die gezielte Bewegung von Schritten der Füße bzw. Beine untersucht. So können Fehlbedienungen zum Beispiel durch vorbeilaufende Tiere oder Gegenstände wie zum Beispiel Schirme verhindert werden. Im Ablauf der Gestik zum Öffnen der Heckklappe wird ein Fuß oder Bein im Erfassungsbereich erwartet und zeitgleich der hinten anstehende Fuß oder Bein im erweiterten Erfassungsbereich gesucht. Es kann vorgesehen sein, dass zum gewollten Öffnungs- oder Schließwunsch der Heckklappe immer zwei Füße oder auch Beine in einer gespreizten Stellung erwartet werden.

Es kann weiter vorgesehen sein, dass für eine Bewegungserkennung der Schrittabfolge anhand von Flächenschwerpunkten ermittelte Trajektorienpunkte verwendet werden. Flächenschwerpunkten sind einfach zu ermitteln, was eine schnelle Verarbeitung auch bei geringer Rechenkapazität erlaubt. Pro Bild wird für jeden Fuß beziehungsweise jedes Bein ein Flächenschwerpunkt berechnet und diese Punkte über die Bildfolge zu zwei Trajektorien verbunden. Anhand der Trajektorien kann nun eine einfache und genaue Erkennung der Bewegung ausgeführt werden.

Die erfindungsgemäße Vorrichtung zur externen Betätigung eines Aktors eines Fahrzeugs, aufweisend einen optischen TOF-Sensor und eine Steuereinheit, wobei der optische TOF-Sensor und die Steuereinheit eingerichtet sind, eine Annäherung einer Person in einem Annäherungsbereich des optischen TOF-Sensors zu erfassen, sieht vor, dass der optische TOF-Sensor und die Steuereinheit eingerichtet sind, innerhalb eines Erfassungsbereichs des optischen TOF-Sensors eine gezielte Annäherung von Schritten einer Person zu einem Betätigungsbereich des optischen TOF-Sensors zu erkennen, und dass die Steuereinheit eingerichtet ist, den Aktor zu betätigen, wenn ein Schritt in den Betätigungsbereich des optischen TOF-Sensors erkannt wird. Es gelten die gleichen Vorteile und Modifikationen wie zuvor beschrieben. Die Charakteristik eines TOF (Time of Flight, Laufzeit) Sensors ist hier besonders passend, da sowohl der Abstand der Füße oder Beine ausgegeben wird, als auch ein optisches Bild, das wie zuvor beschrieben verarbeitet werden kann.

Eine Lichtquelle kann vorgesehen sein, die eingerichtet ist, den Betätigungsbereich optisch zu markieren. Dies kann neben der Darstellung des Zielgebiets genutzt werden, der sich annähernden Person ein Feedback über die positive Erkennung von Berechtigung zur Öffnung des Fahrzeugs und/oder Durchführung des Verfahrens zur Betätigung einer Klappe oder Tür zu geben.

Die Lichtquelle kann eingerichtet sein, Linien auf den Boden zu projizieren. Da dank der Schritterkennung für die Betätigung des Aktors keine Bewegung auf einen Punkt oder einem kleinen Bereich nötig ist, genügen nun Linien oder ein Trapez und kein Punkt auf dem Boden. Hiermit kann die Sichtbarkeit des Betätigungsbereichs auch bei starker Sonneneinstrahlung gewährleistet werden.

Das Steuergerät kann eingerichtet sein, eine Objekterkennung basierend auf Daten des optischen TOF-Sensors durchzuführen. Wie oben beschrieben, erlaubt eine Objekterkennung eine gezielte Erkennung und Auswertung von Schritten und/oder Fußstellungen, was die Bedienung für die Person vereinfacht und beschleunigt.

Das erfindungsgemäße Fahrzeug mit einem Aktor umfasst eine Vorrichtung wie zuvor beschrieben. Es gelten die gleichen Vorteile und Modifikationen wie zuvor beschrieben.

Es kann vorgesehen sein, dass der Aktor eine Heckklappe des Fahrzeugs betätigt und dass die Vorrichtung zur externen Betätigung des Aktors in einem Heckbereich des Fahrzeugs angeordnet ist. Dies ist ein günstiger Anwendungsfall, da zum Beispiel nach einem Einkauf beide Hände beladen sind und eine Öffnung der Heckklappe ohne Gebrauch der Hände und ohne Gesten der Füße einfacher ist.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung einer Vorrichtung zur externen Betätigung eines Aktors eines Fahrzeugs;
- Figur 2: eine schematische Darstellung einer Vorrichtung zur externen Betätigung eines Aktors eines Fahrzeugs mit einem Hindernis; und
- Figur 3: eine schematische Darstellung von Sensordaten.

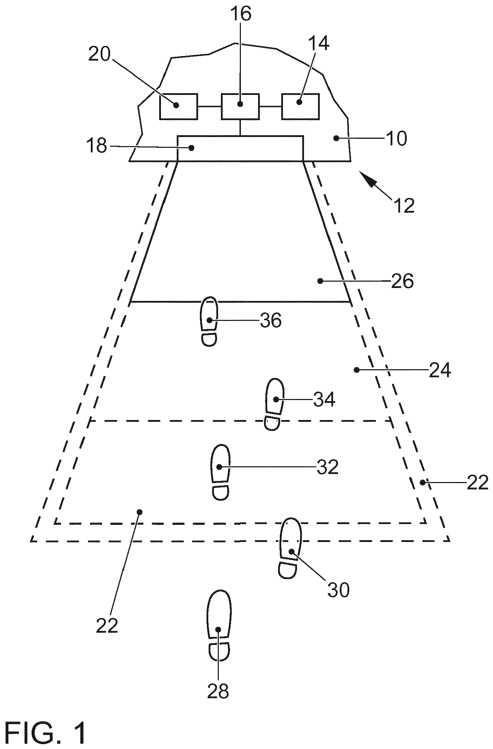

Figur 1 zeigt einen Bereich eines Fahrzeugs 10, wie zum Beispiel einen Ausschnitt eines hinteren Stoßfängers eines PKWs. Als Fahrzeuge werden weiterhin LKWs, Busse, Motorräder, Schienenfahrzeuge sowie Luft- und Wasserfahrzeuge angesehen.

Das Fahrzeug 10 umfasst eine Vorrichtung 12 zur externen Betätigung eines Aktors 14 des Fahrzeugs 10. Der Aktor 14 ist zum Beispiel ein Elektromotor zum Öffnen beziehungsweise Schließen einer Kofferraumklappe. Die Vorrichtung 12 umfasst ein Steuergerät 16, das mit dem Aktor 14 direkt oder über weitere Elemente wie zum Beispiel weitere Steuergeräte in Verbindung steht. Weiterhin umfasst die Vorrichtung 12 eine Lichtquelle 18 sowie einen optischen TOF-Sensor 20 (Time of Flight, Laufzeit).

Der TOF-Sensor 20 hat einen Annäherungsbereich 22, der mehrere Teilbereiche umfassen kann. Der Annäherungsbereich kann der maximalen Reichweite des Sensors 20, die zum Beispiel bei etwa zwei Metern liegen kann, entsprechen oder auf einen Bereich von etwa zwei Metern Entfernung von dem Fahrzeug 10 oder dem Sensor 20 beschränkt werden. Der Annäherungsbereich 22 ist gewissermaßen ein virtueller Bereich, der zum Beispiel über eine Bildverarbeitung und/oder Objekterkennung in dem Steuergerät 16 definiert und verwendet wird. Der Annäherungsbereich 22 dient dazu, eine erste Annäherung eines Objekts wie zum Beispiel einer Person zu erfassen und das Verfahren zu starten.

An den Annäherungsbereich 22 schließt sich in Richtung des Fahrzeugs 10 ein Erfassungsbereich 24 an, der auch seitlich von dem Annäherungsbereich 22 umgeben ist. In dem Erfassungsbereich 24 können durch den Sensor 18 und das Steuergerät 16 eine gezielte Annäherung von Schritten einer Person zu dem Sensor 18 hin erkannt werden. Auch der Annäherungsbereich 22 ist wie der Annäherungsbereich 22 gewissermaßen ein virtueller Bereich.

An den Erfassungsbereich 24 schließt sich in Richtung des Fahrzeugs 10 ein Betätigungsbereich 26 an, der auch seitlich von dem Annäherungsbereich 22 umgeben ist. Der Betätigungsbereich 26 ist durch eine trapezförmige Lichtprojektion aus der Lichtquelle 18 auf den Boden bei dem Fahrzeug 10 markierbar. Dadurch weiß eine Person, welche den Aktor 14 bedienen möchte, wohin sie sich bewegen muss. Die Lichtquelle 18 kann eine quadratische Optik enthalten, so dass durch eine winklige Anordnung in dem Fahrzeug 10 ein trapezförmige Projektion auf dem Boden entsteht.

Im Folgenden wird ein Verfahren zur externen Betätigung des Aktors 14 des Fahrzeugs 10 beschrieben. Wenn das Fahrzeug 10 abgestellt ist, überwacht der Sensor 18 den Annäherungsbereich 22. Sobald etwas von dem Sensor 18 wahrgenommen wird, wird ein Signal und/oder ein Bild für eine Auswertung an das Steuergerät 16 geschickt.

Die Annäherung einer Person wird nun betrachtet. Der Sensor 18 beziehungsweise das Steuergerät 16 folgen einem Algorithmus, um nicht nur eine Annäherung zu erkennen, sondern um Schritte zu detektieren und aus der Richtung der Schritte auf die Absicht der Person zu schließen, um so eine schnelle Bearbeitung zu ermöglichen.

Ein erster Schritt 28, hier des linken Fußes der Person, zielt bereits in Richtung des Fahrzeugs 10. Er wird aber noch nicht erfasst, das er außerhalb des Annäherungsbereiches 22 liegt. Der nächste Schritt 30 geht in den Annäherungsbereich 22 hinein und wird von dem Sensor 20 erfasst. Der Sensor 20 sendet zunächst nur eine Nachricht an das Steuergerät 16, welches nun eine Identifizierung der Person durch ein schlüsselloses Zugangssystem des Fahrzeugs 10 veranlasst. Wenn die Person keine Berechtigung hat, wird das Verfahren nicht weitergeführt. Die Überwachung durch den Sensor 20 kann für eine vorgegebene Zeit pausiert werden, um so das Weitergehen der Person abzuwarten. Bei erfolgreicher Identifizierung der Person veranlasst das Steuergerät 16 eine Aktivierung der Lichtquelle 18, so dass das Trapez auf den Boden projiziert wird. Ebenso werden jetzt die Daten des Sensors 20, dies sind Abstands- oder 3D-Daten und Bild- oder 2D-Daten, an das Steuergerät 16 zur Auswertung übertragen.

Aus der Richtung des Schritte 30 kann auch eine vorbeilaufende Person detektiert werden. 'Bei dieser ist der Fuß nicht auf das Fahrzeug 10 hin gerichtet, sondern um etwa 90 Grad gedreht. Wird von dem Steuergerät 16 eine vorbeilaufende Person erkannt, wird ebenso verfahren als ob keine Berechtigung vorliegt.

Mittlerweile hat die Person einen weiteren Schritt 32 in Richtung des Sensors 20 gemacht. Der nächste Schritt 34 ist in den Erfassungsbereich 24 hinein gemacht. Nun werden die Schritte der Person genau analysiert. Die Grenze zwischen dem Annäherungsbereich 22 und dem Erfassungsbereich 24 ist adaptiv und kann unter anderem in Abhängigkeit von der Gehgeschwindigkeit der Person angepasst werden. Bei einer sich schnell bewegenden Person kann zum Beispiel der Erfassungsbereich 24 vergrößert werden.

Die zeitliche Auflösung der Sensordaten kann zum Beispiel bei etwa fünf bis dreißig Bildern oder Frames pro Sekunde liegen. Je nach Gehgeschwindigkeit der Person kann dies angepasst werden, zum Beispiel in einem Rahmen von zehn bis zwanzig Bildern pro Sekunde.

Wenn der nächste Schritt 36 gemacht wird, detektiert die Vorrichtung 12 einen hinteren stehenden Fuß 34, der auf das Fahrzeug 10 gerichtet und die Bewegung des vorderen Fußes in Richtung des Fahrzeugs 10. Bereits jetzt kann die Vorrichtung 12 auf den Wunsch nach Betätigung des Aktors 14 schließen und schon eine Betätigung veranlassen, während sich der Fuß noch bewegt. Dies erlaubt eine sehr flüssige Betätigung ohne Totzeiten oder zusätzliche Bewegungen. Die hier genannten Schritte können auch als Füße angesehen werden.

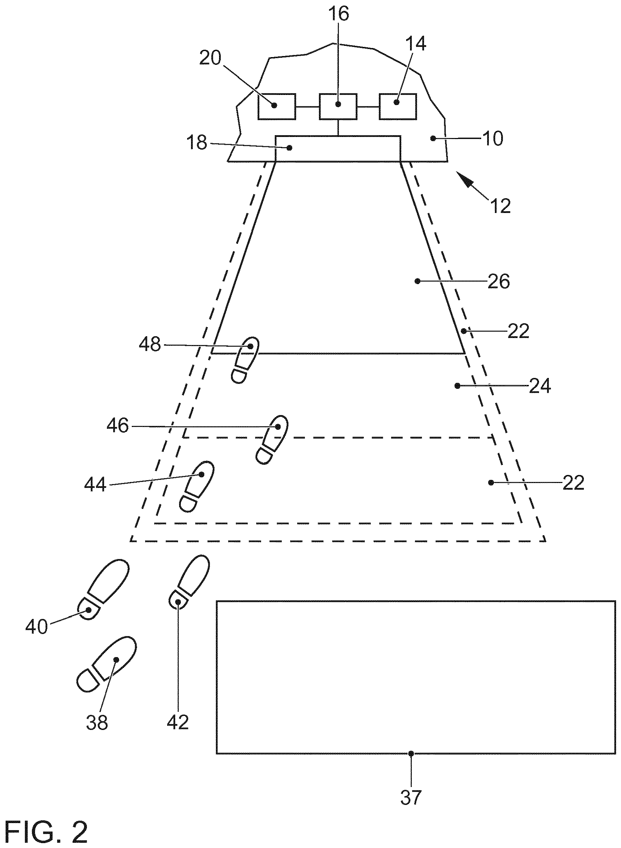

In Figur 2 ist eine andere Situation dargestellt, in der sich ein Hindernis 37 hinter dem Fahrzeug 10 befindet. Entsprechend wurden nun die Größe des Annäherungsbereiches 22 und des Erfassungsbereiches 24 derart angepasst, dass eine Stauchung vorgenommen wurde, so dass die Bereiche an das Hindernis 37 angepasst sind.

Aufgrund des Hindernisses 37 bewegt sich die Person mit den Schritten 38, 40 und 42 zunächst seitlich auf das Fahrzeug 10 zu. Diese Schritte werden noch nicht erfasst, da sich noch außerhalb des dynamisch angepassten Annäherungsbereiches 22 liegen. Der Schritt 44 ist dem Fahrzeug 10 halb zugewandt und wird von dem Sensor 20 erfasst. Auch bei erfolgreicher Identifizierung kann vorgesehen sein, dass die Lichtquelle 18 noch nicht aktiviert wird, da es sein könnte, dass die Person zwar berechtigt ist, aber an dem Fahrzeug 10 vorbeilaufen will.

Der Schritt 46 ist voll auf das Fahrzeug 10 beziehungsweise den Sensor 20 gerichtet. Nun wird die Lichtquelle 18 aktiviert. Da der Schritt 46 auch in den Erfassungsbereich 24 hinein gemacht wurde, werden die Schritte der Person nun genau analysiert. Mit dem nächsten Schritt 48 beziehungsweise mit dessen Erkennung wird, analog zu der Beschreibung von Figur 1, der Aktor 14 ausgelöst.

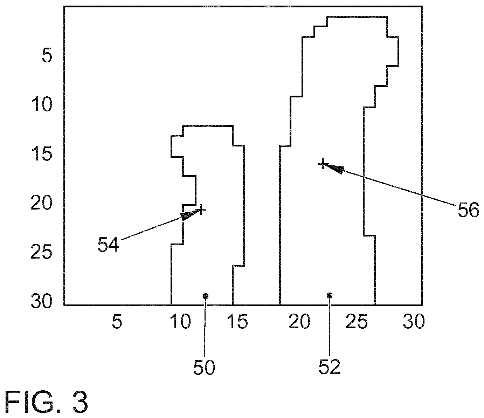

In Figur 3 ist ein Bild oder Frame des Sensors 20 dargestellt. Der Sensor 20 hat dreißig mal dreißig Bildpunkte oder Pixel, die an den Rändern der Darstellung aufgetragen sind. Dargestellt sind ein erster Fuß 50 und ein zweiter Fuß 52. Wenn hier der Begriff Fuß benutzt wird, kann auch ein Teil des Beines wie zum Beispiel ein Unterschenkel mit umfasst sein. Dieses Bild beinhaltet keine direkte Abstandsinformation, sondern stellt ein 2D-Abbild des Fußbereichs der sich nähernden Person dar.

Für die Bildverarbeitung sind die relative Position und die Ausrichtungen der beiden Füße detektierbar. In einem ersten Schritt werden die beiden Füße erkannt, um so das Annähern einer Person zu erkennen. Die beiden Füße 50 und 52 werden getrennt betrachtet, um eine bessere Aussage zu der Bewegungsrichtung der Person zu erlangen. Für jedes Sensorbild, wie es in Figur 3 dargestellt ist, werden für jedes Fuß 50 beziehungsweise 52 der entsprechende Flächenschwerpunkt 54 beziehungsweise 56 berechnet. Anhand der zeitlich aufeinanderfolgenden Flächenschwerpunkt 54 und 56 werden Bewegungstrajektorien gebildet, aus der sich die Bewegungen der beiden Füße 50 und 52 einfach verfolgen und auch vorhersagen lässt.

Die beschriebenen Verfahrensschritte werden in dem Steuergerät 16 oder in einer anderen Recheneinheit des Fahrzeugs 10 ausgeführt.

Zusammengefasst wird ein neuartiges Verfahren zur Vorfelderkennung und Bewertung, ob ein Aktor 14 in der nächsten Zeit am Fahrzeug 10 betätigt werden soll, vorgestellt. Durch diese frühzeitige Erkennung der Intention der Person kann auf Totzeiten in der Bedienung verzichtet werden.

### Bezugszeichenliste

- 10: Fahrzeug
- 12: Vorrichtung
- 14: Aktor
- 16: Steuergerät
- 18: Lichtquelle
- 20: Sensor
- 22: Annäherungsbereich
- 24: Erfassungsbereich
- 26: Betätigungsbereich
- 28: Schritt
- 30: Schritt
- 32: Schritt
- 34: Schritt
- 36: Schritt
- 37: Hindernis
- 38: Schritt
- 40: Schritt
- 42: Schritt
- 44: Schritt
- 46: Schritt
- 48: Schritt
- 50: Fuß
- 52: Fuß
- 54: Flächenschwerpunkt
- 56: Flächenschwerpunkt

## Patentansprüche

1. Verfahren zur externen Betätigung eines Aktors eines Fahrzeugs (10) mit einem optischen Sensor (20), mit den Schritten:
- Erfassen einer Annäherung einer Person in einem Annäherungsbereich (22) des optischen Sensors (20);
- Erkennen, innerhalb eines Erfassungsbereichs (24) des optischen Sensors (20), einer gezielten Annäherung von Schritten einer Person zu einem Betätigungsbereich (26) des optischen Sensors (20);
- Betätigen des Aktors (14), wenn ein Schritt (36, 48) in den Betätigungsbereich (26) des optischen Sensors (20) erkannt wird.

2. Verfahren nach Anspruch 1, **dadurch gekennzeichnet, dass** der Annäherungsbereich (22) und/oder der Erfassungsbereich (24) an von dem optischen Sensor (20) detektierte Umgebungsbedingungen angepasst wird.

3. Verfahren nach einem der vorhergehenden Ansprüche, **dadurch gekennzeichnet, dass** eine Bildrate des optischen Sensors (20) an die erkannte Schrittgeschwindigkeit angepasst wird.

4. Verfahren nach einem der vorhergehenden Ansprüche, **dadurch gekennzeichnet, dass** nach dem Erkennen einer gezielten Annäherung Linien auf den Boden projiziert werden, welche den Betätigungsbereich (26) des optischen Sensors (20) kennzeichnen.

5. Verfahren nach einem der vorhergehenden Ansprüche, **dadurch gekennzeichnet, dass** die Linien projiziert werden und/oder der Aktor (14) betätigt wird, wenn eine erfolgreiche Identifizierung der Person durch ein schlüsselloses Zugangssystem des Fahrzeugs (10) erfolgt ist.

6. Verfahren nach einem der vorhergehenden Ansprüche, **dadurch gekennzeichnet, dass** für das Erkennen einer gezielten Annäherung von Schritten eine Objekterkennung basierend auf Daten des optischen Sensors (20) durchgeführt wird, bei der ein Fußpaar und die Schrittabfolge der einzelnen Füße detektiert wird.

7. Verfahren nach Anspruch 6, **dadurch gekennzeichnet, dass** für eine Bewegungserkennung der Schrittabfolge anhand von Flächenschwerpunkten (50, 52) ermittelte Trajektorienpunkte verwendet werden.

8. Vorrichtung zur externen Betätigung eines Aktors (14) eines Fahrzeugs (10), aufweisend einen optischen TOF-Sensor (20) und eine Steuereinheit (16), wobei der optische TOF-Sensor (20) und die Steuereinheit (16) eingerichtet sind, eine Annäherung einer Person in einem Annäherungsbereich (22) des optischen TOF-Sensors (20) zu erfassen, **dadurch gekennzeichnet, dass** der optische TOF-Sensor (20) und die Steuereinheit (16) eingerichtet sind, innerhalb eines Erfassungsbereichs (24) des optischen TOF-Sensors (20) eine gezielte Annäherung von Schritten einer Person zu einem Betätigungsbereich (26) des optischen TOF-Sensors (20) zu erkennen, und dass die Steuereinheit (16) eingerichtet ist, den Aktor (14) zu betätigen, wenn ein Schritt (36, 48) in den Betätigungsbereich (26) des optischen TOF-Sensors (20) erkannt wird.

9. Vorrichtung nach Anspruch 8, **dadurch gekennzeichnet, dass** eine Lichtquelle (18) vorgesehen ist, die eingerichtet ist, den Betätigungsbereich optisch zu markieren.

10. Vorrichtung nach Anspruch 9, **dadurch gekennzeichnet, dass** die Lichtquelle (18) eingerichtet ist, Linien auf den Boden zu projizieren.

11. Vorrichtung nach einem der vorhergehenden Ansprüche, **dadurch gekennzeichnet, dass** das Steuergerät (16) eingerichtet ist, eine Objekterkennung basierend auf Daten des optischen TOF-Sensors (20) durchzuführen.

12. Fahrzeug mit einem Aktor, **dadurch gekennzeichnet, dass** eine Vorrichtung (12) nach einem der Ansprüche 8 bis 11 vorgesehen ist.

13. Fahrzeug nach Anspruch 12, **dadurch gekennzeichnet, dass** der Aktor (14) eine Heckklappe des Fahrzeugs (10) betätigt und dass die Vorrichtung (12) zur externen Betätigung des Aktors (14) in einem Heckbereich des Fahrzeugs (10) angeordnet ist.

## Claims

1. Method for externally activating an actuator of a vehicle (10) having an optical sensor (20), including the steps of:
- capturing an approach of a person within a proximity region (22) of the optical sensor (20);
- recognizing, within a capturing region (24) of the optical sensor (20), a deliberate approach of steps of a person to an activation region (26) of the optical sensor (20) ;
- activating the actuator (14) when a step (36, 48) into the activation region (26) of the optical sensor (20) is recognized.

2. Method according to Claim 1, **characterized in that** the proximity region (22) and/or the capturing region (24) is adapted to ambient conditions detected by the optical sensor (20).

3. Method according to one of the preceding claims, **characterized in that** a frame rate of the optical sensor (20) is adapted to the step speed that is recognized.

4. Method according to one of the preceding claims, **characterized in that**, after a deliberate approach has been recognized, lines are projected onto the ground that indicate the activation region (26) of the optical sensor (20) .

5. Method according to one of the preceding claims, **characterized in that** the lines are projected and/or the actuator (14) is activated if the person has been successfully identified by way of a keyless access system of the vehicle (10).

6. Method according to one of the preceding claims, **characterized in that**, for recognizing a deliberate approach of steps, object recognition, in which a pair of feet and the step sequence of the individual feet are detected, is performed based on data of the optical sensor (20).

7. Method according to Claim 6, **characterized in that** trajectory points, which have been ascertained on the basis of area centroids (50, 52), are used for a movement recognition of the step sequence.

8. Apparatus for externally activating an actuator (14) of a vehicle (10), including an optical TOF Sensor (20) and a control unit (16), wherein the optical TOF Sensor (20) and the control unit (16) are set up to capture an approach of a person within a proximity region (22) of the optical TOF Sensor (20), **characterized in that** the optical TOF Sensor (20) and the control unit (16) are set up to recognize, within a capturing region (24) of the optical TOF Sensor (20), a deliberate approach of steps of a person to an activation region (26) of the optical TOF Sensor (20), and **in that** the control unit (16) is set up to activate the actuator (14) when a step (36, 48) into the activation region (26) of the optical TOF Sensor (20) has been recognized.

9. Apparatus according to Claim 8, **characterized in that** a light source (18) is provided, which is set up to optically mark the activation region.

10. Apparatus according to Claim 9, **characterized in that** the light source (18) is set up to project lines onto the ground.

11. Apparatus according to one of the preceding claims, **characterized in that** the control unit (16) is set up to perform object recognition based on data of the optical TOF Sensor (20).

12. Vehicle having an actuator, **characterized in that** an apparatus (12) according to one of Claims 8 to 11 is provided.

13. Vehicle according to Claim 12, **characterized in that** the actuator (14) activates a tailgate of the vehicle (10) and **in that** the apparatus (12) for externally activating the actuator (14) is arranged in a rear region of the vehicle (10).

## Revendications

1. Procédé d'actionnement externe d'un actionneur d'un véhicule (10) doté d'un capteur optique (20), comprenant les étapes suivantes :
- détection d'une approche d'une personne dans une zone d'approche (22) du capteur optique (20) ;
- reconnaissance, à l'intérieur d'une zone de détection (24) du capteur optique (20), d'une approche ciblée des pas d'une personne vers une zone d'actionnement (26) du capteur optique (20) ;
- actionnement de l'actionneur (14) si un pas (36, 48) a été reconnu dans la zone d'actionnement (26) du capteur optique (20).

2. Procédé selon la revendication 1, **caractérisé en ce que** la zone d'approche (22) et/ou la zone de détection (24) sont adaptées aux conditions environnantes détectées par le capteur optique (20).

3. Procédé selon l'une des revendications précédentes, **caractérisé en ce qu'**une fréquence d'images du capteur optique (20) est adaptée à la vitesse de pas reconnue.

4. Procédé selon l'une des revendications précédentes, **caractérisé en ce qu'**après la reconnaissance d'une approche ciblée, des lignes sont projetées sur le sol, lesquelles identifient la zone d'actionnement (26) du capteur optique (20).

5. Procédé selon l'une des revendications précédentes, **caractérisé en ce que** les lignes sont projetées et/ou l'actionneur (14) est actionné lorsqu'une identification réussie de la personne par un système d'accès sans clé du véhicule (10) a eu lieu.

6. Procédé selon l'une des revendications précédentes, **caractérisé en ce que** pour la reconnaissance d'une approche ciblée de pas, une reconnaissance d'objet est effectuée en se basant sur des données du capteur optique (20), lors de laquelle une paire de pieds ainsi que la séquence de pas des pieds individuels sont détectées.

7. Procédé selon la revendication 6, **caractérisé en ce que** des points de trajectoire déterminés à l'aide de barycentres géométriques (50, 52) sont utilisés pour une reconnaissance du mouvement de la séquence de pas.

8. Dispositif d'actionnement externe d'un actionneur (14) d'un véhicule (10), possédant un capteur optique TOF (20) et une unité de commande (16), le capteur optique TOF (20) et l'unité de commande (16) étant conçus pour détecter une approche d'une personne dans une zone d'approche (22) du capteur optique TOF (20), **caractérisé en ce que** le capteur optique TOF (20) et l'unité de commande (16) sont conçus pour reconnaître, à l'intérieur d'une zone de détection (24) du capteur optique TOF (20), une approche ciblée des pas d'une personne vers une zone d'actionnement (26) du capteur optique TOF (20), et **en ce que** l'unité de commande (16) est conçue pour actionner l'actionneur (14) si un pas (36, 48) a été reconnu dans la zone d'actionnement (26) du capteur optique TOF (20).

9. Dispositif selon la revendication 8, **caractérisé en ce qu'**une source de lumière (18) est prévue, laquelle est conçue pour marquer visuellement la zone d'actionnement.

10. Dispositif selon la revendication 9, **caractérisé en ce que** la source de lumière (18) est conçue pour projeter des lignes sur le sol.

11. Dispositif selon l'une des revendications précédentes, **caractérisé en ce que** le contrôleur (16) est conçu pour effectuer une reconnaissance d'objet en se basant sur des données du capteur optique TOF (20).

12. Véhicule équipé d'un actionneur, **caractérisé par** en ce qu'un dispositif (12) est prévu selon l'une des revendications 8 à 11.

13. Véhicule selon la revendication 12, **caractérisé en ce que** l'actionneur (14) actionne un hayon arrière du véhicule (10) et **en ce que** le dispositif (12) servant à l'actionnement externe de l'actionneur (14) est disposé dans une zone arrière du véhicule (10).
